# EUROPEAN PATENT SPECIFICATION

(11) **EP 2 500 108 B1**
(45) Date of publication and mention of the grant of the patent: **22.10.2014**
(21) Application number: 12158996.4
(22) Date of filing: 12.03.2012
(51) Int. Cl.: B05C 11/10, B29B 13/02

(54) **Apparatus for heating and extracting adhesives from sealed cartridges**
Vorrichtung zum Erwärmen und Extraktion von Klebstoffkartuschen
Appareil de chauffage et d'extraction d'adhésive d'un cartuche

(30) Priority: 15.03.2011 IT MI20110406
(43) Date of publication of application: 19.09.2012
(73) Proprietor: Preo S.r.l., 20094 Corsico (MI) (IT)
(72) Inventor: Preo, Ermanno, 20094 Corsico (MI) (IT)
(74) Representative: Raimondi, Margherita

(56) References cited:
- EP-A1- 0 434 617
- EP-A2- 1 331 041
- US-A- 4 898 302

## Description

The present invention relates to an apparatus for heating and extracting adhesives contained in the solid state inside sealed cartridges.

In the technical sector relating to machines for dispensing adhesives it is known that there exist difficulties in connection with polyurethane adhesives which, when they come into contact with air, crosslink and become unusable, preventing dispensing at a later time or after long time periods.

Examples of such prior art **according to the preamble of claim 1** are described in EP 1,331,041, US 4,898,302 and EP 0,434,617.

EP 1,331,041 describes an apparatus in which a platen supporting a rigid container is moved from a bottom position for loading/unloading the rigid container into a position for making contact with a top fixed heating plate.

US 4,898,302 describes an apparatus with a rigid container support ring which is displaceable from and towards dispensing devices.

The heating means are arranged underneath the ring and therefore heat from below all the adhesive inside the container, resulting in deterioration of the said adhesive in the event of successive heating and cooling, preventing in fact further extraction operations at a later time.

In an attempt to solve this problem, cartridges consisting of flexible, vacuum-sealed, aluminium bags filled with solid-state polyurethane adhesives have been developed. Said cartridges are then applied to dispensing machines essentially comprising: a fixed platen supporting the cartridge and a so-called presser platen movable coaxially with the said cartridge against which it exerts a compressive force; said movable platen is associated with heating means which dissolve a superficial layer of adhesive, converting it into a fluid state suitable for extraction by means of suction from the cartridge and dispensing via nozzles.

Although performing their intended function, these machines however suffer from a number of drawbacks which limit their use and which are due to the fact that the movable presser platen must carry all the actuating parts and the heating devices with a consequent increase in the moving masses; this results in major oversizing of the structures, the actuating parts and therefore the dimensions and energy consumption levels for the same working speed.

EP 0,434,617 describes an apparatus comprising a cylinder containing a compressible cartridge; the cylinder is heated by the adhesive softening head and therefore the entire container and all the adhesive inside it are heated during dispensing with consequent deterioration over time of the adhesive, resulting in the need for replacement of the cartridge even though not completely empty.

EP 0,434,617 also discloses an apparatus comprising a cylinder containing a compressible cartridge; the cylinder is heated by the adhesive softening head and therefore the entire container and all the adhesive inside it are heated during dispensing with consequent deterioration over time of the adhesive, resulting in the need for replacement of the cartridge even though not completely empty.

In addition to this, the piston, when pulled downwards towards the bottom end-of-stroke position, nevertheless remains axially situated within the guide cylinder; this means that, in order to change the cartridge, it is necessary to disassemble the top heating plate with obvious disadvantages due to the complexity of the operations and increase in the downtime of the machine.

The technical problem which is posed, therefore, is to provide an improved apparatus for dispensing adhesives of the polyurethane or equivalent type, which are contained in the solid state inside compressible sealed containing cartridges, which apparatus does not cause heating of all the adhesive contained inside the container and allows rapid replacement of the used container, reducing the downtime of the machine.

In connection with this problem it is also required that this apparatus should have small dimensions, be easy and inexpensive to produce and assemble, be able to be installed easily at any user location using normal standardized connection means and also be able to be easily used by unskilled personnel. These results are achieved according to the present invention by an apparatus for heating and extracting adhesives contained in the solid state inside sealed cartridges according to the characteristic features of Claim 1.

Further details may be obtained from the following description of a non-limiting example of embodiment of the subject of the present invention provided with reference to the accompanying drawings in which:
- Figure 1 :: shows an exploded view of the
- Figure 2:: apparatus according to the present invention; shows a cross-sectional view along a vertical plane of the cartridge with the mouth engagement means applied;
- Figure 3:: shows a front view of the apparatus of Fig. 1 assembled and in the rest condition;
- Figure 4:: shows a perspective view of the apparatus during insertion of the cartridge;
- Figure 5:: shows a front view of the apparatus of Fig. 4 with the cartridge inserted and ready for dispensing;
- Figure 6:: shows a schematic cross-section along a vertical plane of the apparatus during the start of the dispensing cycle;
- Figure 7:: shows a schematic cross-section similar to that of Fig. 6 with the apparatus after a succession of dispensing cycles;
- Figure 8:: shows a schematic cross-section similar to that of Fig. 6 with the used cartridge ready for replacement.

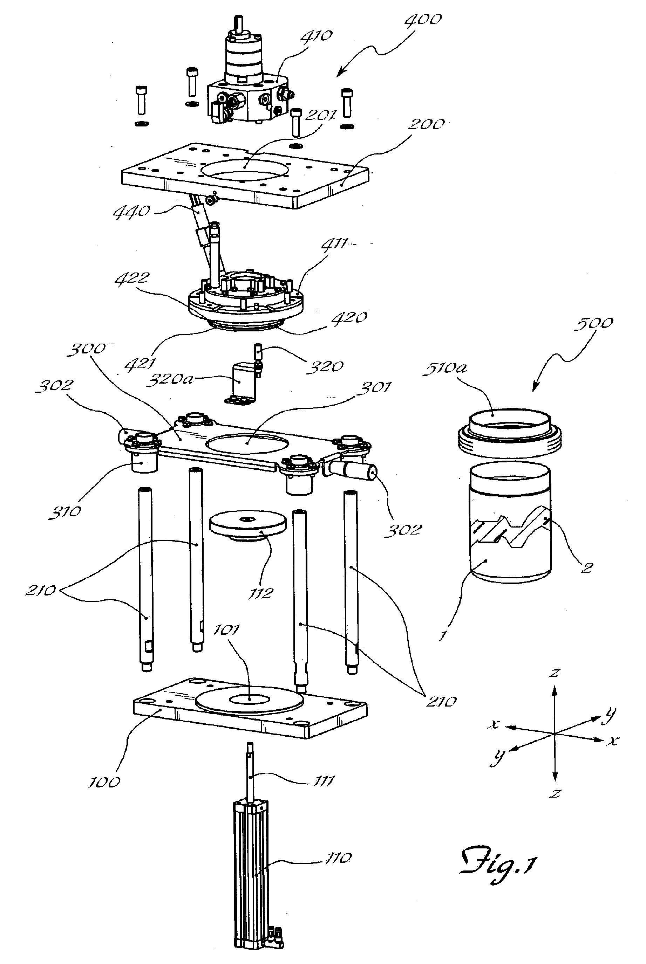

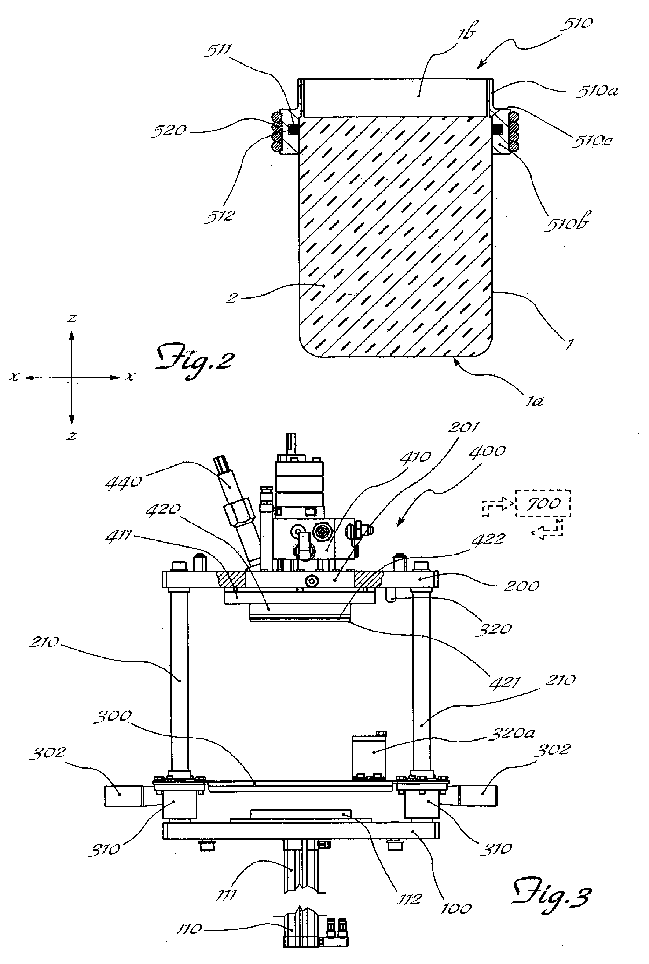

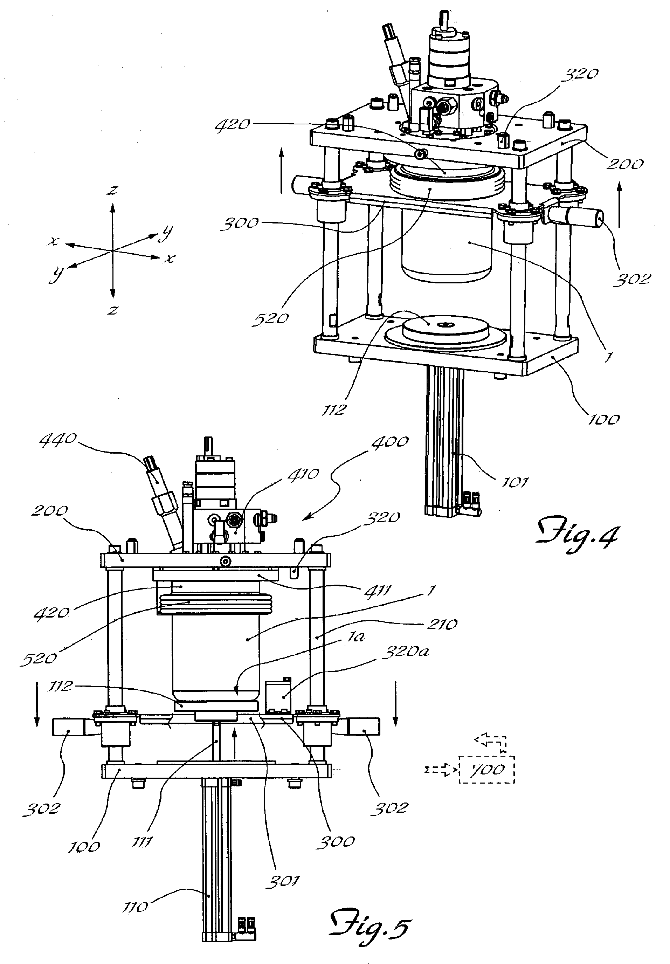

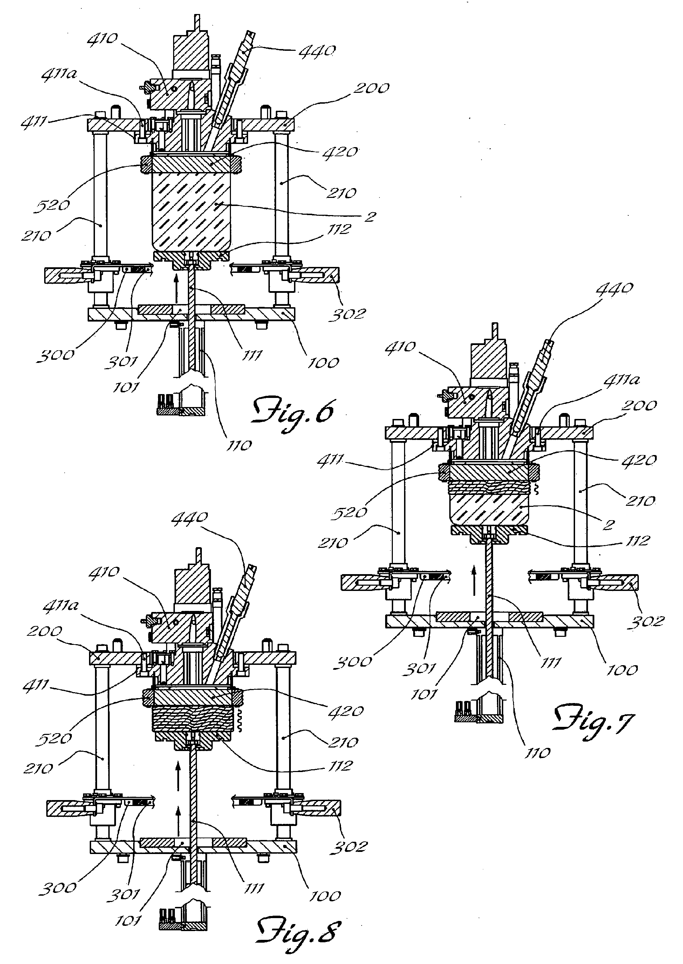

As shown and assuming solely for the sake of convenience of the description and without a limiting meaning a set of three reference axes in a longitudinal direction X-X, transverse direction Y-Y and vertical direction Z-Z, respectively, the apparatus according to the invention for dispensing adhesives 2, such as polyurethane adhesives, contained in the solid state inside sealed cartridges 1, comprises:
-) a substantially flat, fixed, bottom base-piece 100 in which a vertical-axis through-hole 101 is formed; first ends of uprights 210 are fastened onto said bottom base-piece 100, their opposite ends being joined to a fixed top base-piece 200 which is in turn passed through by a coaxial through-hole 201;
-) a cylinder 110 which is fixed to the bottom base-piece 100 and the rod 111 of which is movable inside and coaxially with the bottom opening 101 from a bottom end-of-stroke position, in the example in contact with the base-piece 100, into a top end-of-stroke position (Fig. 8); the free end of the rod 111 carries a platen 112 which is designed to come into contact with the bottom 1a of the cartridge 1 (Fig. 5);
-) a device 400 for heating and extracting the adhesive 2 from inside the cartridge 1, comprising
   . a body 410 fastened to the top plate 200 by means of a flange 411 and screw means 411a;
   . a disk 420 projecting outwards and downwards from the fixing flange 411 and having an outer diameter the same as the inner diameter of the cartridge 1;
   . means (not shown) for heating the bottom surface of the disk 420, which are housed inside the latter; the side surface of the disk 420 being provided with an annular groove 421 for seating an O-ring seal 422;
-) means 440 for suction of the adhesive 2, associated with a pump (not shown), said suction means 440 being connected to the circuit for distributing and dispensing said adhesive;
-) means 500 for engagement with the mouth of the cartridge 1, comprising: a ring 510 with an outer diameter greater than the outer diameter of the cartridge 1 and comprising (Figs. 1 and 2);
-) a top first part 510a with an inner diameter slightly greater than the outer diameter of the heating disk 420 and with a height substantially corresponding to the height of the said heating disk;
-) a bottom second part 510b with a diameter substantially corresponding to the outer diameter of the cartridge 1; conveniently said second part 510b has an annular groove 511 for seating an O-ring 512 or similar sealing element with a high coefficient of friction suitable for making contact with the outer surface of the cartridge so as to retain it and prevent it from falling in the vertical direction after mutual engagement.

Preferably a frustoconical bearing surface 510c able to form an end-of-travel stop for engagement of the mouth of the bag is provided between the first part 510a and the second part 510b of the ring 510.

Conveniently the mouth engagement means 500 envisage a second ring 520 made of material with a low thermal conductivity to be mounted concentrically with the top part 510a of the first ring 510 and suitable for allowing handling/removal of the bag also in the high temperature conditions reached by the apparatus during normal operating conditions.

According to a preferred embodiment of the apparatus it is envisaged that the latter is provided with a cartridge insertion device formed by:
- ) a plate 300 attached to sliders 310 displaceable along the uprights 210 of the base 100;
   said plate 300 has a central hole 301 coaxial with the rod 111 of the cylinder 110 and having an inner diameter smaller than the outer diameter of the bottom part 510b of the ring of the device 500 for engagement with the mouth of the cartridge, but greater than the outer diameter of the top part 510a of the said ring 500.
- ) a pair of gripping elements 302 arranged opposite each other in the longitudinal direction X-X for manual operation of the plate;
- ) a sensor 320 fixed to the top base-piece 200 and designed to detect a locating element 320a fixed to the plate 300.

It is also envisaged that the apparatus has associated programming, control and operating means 700 suitable for programming the operating sequences and the working parameters such as the softening temperature of the adhesive 2, detecting signals emitted by the position sensors of the various moving parts and emitting corresponding command signals to the controlled actuating parts.

With the configuration as described the operating principle of the apparatus is as follows:
- ) the apparatus is prepared with: the rod 111 of the cylinder 110 lowered and the associated platen 112 resting on the fixed bottom base-piece 100 (Fig.2); the plate 300 is in the bottom end-of-stroke position with the sliders 310 resting on the base-piece 100;
- ) the mouth engagement means 500 are inserted inside the mouth 1b of the cartridge 1 and the assembly rests on the platen 112 of the cylinder 100;
- ) by means of the gripping elements 302 the movable plate 330 is manually raised (Fig. 4) and is able to slide, by means of the hole 301, without interference along the cartridge 1 and come into contact with the second outer ring 520 having a diameter greater than the hole 301 of the movable plate 300, so as to press against it, being raised up as far as a position where the heating disk 420 penetrates into the hole in the first part 510a of the first ring 510, retaining the latter by means of friction with the outer 0-ring 422 of the said heating disk;
- ) during the upward stroke the locating element 320a of the movable plate 300 is detected by the sensor 320 which signals the movement of the plate to the control means 700 which actuate the cylinder 110 so as to raise the rod 111 and bring the platen 112 into contact with the bottom 1a of the cartridge 1 against which it stops (Fig.5);
- ) at the same time the pump performs initial suction of the air present inside the cartridge via the said adhesive suction means 440, thus creating the vacuum inside the cartridge so as to prevent the formation of thin layers of crosslinked adhesive which would prevent subsequent use of the adhesive after a certain amount of time;
- ) the apparatus is therefore ready for the adhesive extraction step during which:
- ) the cylinder 100 pushes the platen towards the heating disk 520 against which the surface layer of the adhesive 2 comes into contact, being softened to a predefined state such as to allow extraction thereof by means of the pump and dispensing towards the nozzle 440;
- ) as shown in Figs. 6, 7 and 8 as the adhesive 2 is melted and sucked out, reducing the level of the free surface of the adhesive inside the cartridge, the cylinder 110 pushes correspondingly the bottom 1a of the cartridge towards the heating disk 420, so as to ensure continuous mutual contact between the disk and the adhesive and allow subsequent softening and dispensing; at the same time it compresses upwards the cartridge itself, the vertical dimension of which is correspondingly reduced until, when the adhesive is used up (Fig. 8), the cartridge is completely crumpled up and ready for replacement with a new cartridge and execution of a new cycle similar to that already described.

It is therefore clear how the apparatus according to the invention accomplishes the function of extraction and dispensing of adhesives in the solid state contained inside sealed cartridges, providing a solution to the problems of the prior art since, unlike the latter, the apparatus according to the invention envisages that the heating disk - and therefore all the associated heating and suction devices - are always immobile, together with the top plate, while the sole moving part is the platen situated underneath the bottom of the cartridge and joined to the rod of a cylinder in turn fixed to the bottom base-piece.

This means that it is possible to keep the dimensions of the various parts very small and in particular eliminate the parts for actuating the heating plate, which is no longer mobile, therefore reducing the overall dimensions and the energy consumption levels.

In addition to this, the fact that the heating plate is arranged above the cartridge results in a circulation of heat which tends to rise above the cartridge itself such that the latter remains cold without the need for auxiliary refrigerating or conditioning devices, thus avoiding also subsequent steps for heating/cooling the adhesive which adversely affect its physical properties and impair its working performance.

It is also envisaged that, although described in relation to manual/semi-manual operating modes, the various operating sequences may be performed automatically with the insertion of detectors and sensors connected to the programming and control means 700 of associated actuators.

Although described in connection with certain constructional forms and certain preferred examples of embodiment of the invention, it is understood that the scope of protection of the present patent is defined solely by the following claims.

## Claims

1. Apparatus for heating and extracting adhesives (2) contained in the solid state inside sealed flexible cartridges, comprising means (110,111,112) for supporting and pressing against the bottom of the cartridge, means (420) for softening the adhesive (2) inside the cartridge, means (440) for suction and dispensing of the adhesive (2), said softening means (420) and suction means (440) being joined to a fixed top base-piece (200), **characterized in that** it comprises a fixed bottom base-piece (100) to which said supporting and pressing means (110,111,112) are joined, said supporting and pressing means being displaceable relative to said fixed bottom base-piece (100) from a bottom end-of-stroke position, corresponding to a cartridge full condition, to a top end-of-stroke position, corresponding to a cartridge empty condition, and means (500) for engaging the mouth of the cartridge (1) with said adhesive softening means (420) **AND IN THAT said means (500) for engagement with the mouth of the cartridge (1) comprise a ring (510) formed by:**
- **a top first part (510a) with an inner diameter slightly greater than the outer diameter of the heating disk (420) and with a height substantially corresponding to the height of the said heating disk and**
- **a bottom second part (510b) with a diameter substantially corresponding to the outer diameter of the cartridge (1).**

2. Apparatus according to Claim 1, **characterized in that** said fixed bottom base-piece (100) has a through-opening (101).

3. Apparatus according to Claim 1, **characterized in that** first ends of uprights (210) are fastened to said bottom base-piece (100), the opposite ends of said uprights being joined to the fixed top base-piece (200).

4. Apparatus according to Claim 2, **characterized in that** said means for supporting and pressing the cartridge (1) comprise a cylinder (110) which is fixed to the bottom base-piece (100) and the rod (111) of which is movable inside and coaxially with its opening (101), a platen (112) able to come into contact with the bottom (1a) of the cartridge (1) being fastened to the free end of the rod (111).

5. Apparatus according to Claim **1, characterized in that** a frustoconical bearing surface (510c) able to form an end-of-stroke stop for engagement of the mouth of the bag is provided between the first part (510a) and the second part (510b) of the ring (510).

6. Apparatus according to Claim **1, characterized in that** an annular groove (511) for seating an O-ring (512) is formed on the outer surface of the bottom part (510b) of the ring (510).

7. Apparatus according to Claim 1, **characterized in that** said first part (510a) of the mouth engagement ring has an inner diameter greater than the outer diameter of the heating disk (420).

8. Apparatus according to Claim **1, characterized in that** said mouth engagement means (500) have a second ring (520) made of a material with a low thermal conductivity to be mounted concentrically with the top part (510a) of the first ring (510).

9. Apparatus according to Claim 1, **characterized in that** it comprises a device (300) for insertion of the cartridge (1) on the heating means.

10. Apparatus according to Claim **9, characterized in that** said insertion device comprises a plate (300) joined to sliders (310) displaceable on the uprights (210) of the base-piece (200), said plate being provided with a central hole (301) coaxial with the rod (111) of the cylinder (110) and having an inner diameter smaller than the diameter of the bottom part (510b) of the ring (510) of the device (500) for engagement with the mouth of the cartridge, but greater than the outer diameter of the cartridge itself.

11. Apparatus according to Claim **10, characterized in that** said insertion means are associated with a sensor (320) able to detect the passing movement of the plate (300) during the stroke towards the heating disk.

12. Apparatus according to Claim **11, characterized in that** said sensor (320) is designed to emit a consent signal for operation of the means (110,112) for supporting and pressing the cartridge.

13. Apparatus according to Claim **9, characterized in that** said insertion **device is** manual.

14. Apparatus according to Claim **9, characterized in that** said insertion **device** comprises gripping elements (302).

15. Apparatus according to Claim 1, **characterized in that** it comprises means (700) for programming, control and automatic execution of the parameters and the working sequences.

## Patentansprüche

1. Vorrichtung zum Erwärmen und Abziehen von Klebstoffen (2), die in festem Zustand in abgedichteten flexiblen Kartuschen enthalten sind, umfassend Mittel (110, 111, 112) zum Halten und Drücken gegen den Boden der Kartusche, Mittel (420) zum Erweichen des Klebstoffs (2) im Inneren der Kartusche, Mittel (440) zum Ansaugen und Ausgeben des Klebstoffs (2), wobei die Erweichungsmittel (420) und die Ansaugmittel (440) an einem fixierten oberen Basisteil (200) angebracht sind, **dadurch gekennzeichnet, dass** sie ein fixiertes unteres Basisteil (100) aufweist, an welchem die Halte- und Andrückmittel (110, 111, 112) angebracht sind, wobei die Halte- und Andrückmittel in Bezug auf das fixierte untere Basisteil (100) ausgehend von einer unteren Hubendeposition entsprechend einem vollen Kartuschenzustand zu einer oberen Hub- endeposition verlagerbar sind, und Mittel (500) aufweist, um die Mündung der Kartusche (1) mit den Klebstoff-Erweichungsmitteln (420) zusammenzubringen, und dass die Mittel (500) zum Zusammenbringen der Mündung der Kartusche (1) einen Ring (510) aufweisen, gebildet durch:
- einen oberen ersten Teil (510a) mit einem Innendurchmesser, der etwas größer ist als der Außendurchmesser der Erwärmungsscheibe (420), und mit einer Höhe im wesentlichen entsprechend der Höhe der Erwärmungsscheibe, und
- ein unteres zweites Teil (510b) mit einem Durchmesser im wesentlichen entsprechend dem Außendurchmesser der Kartusche (1).

2. Vorrichtung nach Anspruch 1, **dadurch gekennzeichnet, dass** das fixierte untere Basisstück (100) eine Durchgangsöffnung (101) besitzt.

3. Vorrichtung nach Anspruch 1, **dadurch gekennzeichnet, dass** die ersten Enden von Pfosten (210) an dem unteren Basisstück (100) befestigt sind, während die abgewandten Enden der Pfosten mit dem fixierten oberen Basisstück (200) verbunden sind.

4. Vorrichtung nach Anspruch 2, **dadurch gekennzeichnet, dass** die Mittel zum Halten und Andrücken der Kartusche (1) aufweisen: einen Zylinder (110), der an dem unteren Basisstück (100) fixiert ist, und dessen Kolbenstange (111) im Inneren und koaxial mit dessen Öffnung (101) bewegbar ist, eine Platte (112), die in Berührung mit dem Boden (1a) der Kartusche (1) bringbar ist und an dem freien Ende der Kolbenstange (111) befestigt ist.

5. Vorrichtung nach Anspruch 1, **dadurch gekennzeichnet, dass** eine kegelstumpfförmige Lagerfläche (510c), die einen Hubende-Anschlag zum Zusammenwirken mit der Mündung des Beutels bilden kann, zwischen dem ersten Teil (510a) und dem zweiten Teil (510b) des Rings (510) vorgesehen ist.

6. Vorrichtung nach Anspruch 1, **dadurch gekennzeichnet, dass** in der Außenfläche des unteren Teils (510b) des Rings (510) eine Ringnut (510) zum Aufnehmen eines O-Rings (512) ausgebildet ist.

7. Vorrichtung nach Anspruch 1, **dadurch gekennzeichnet, dass** der erste Teil (510a) des Mündungs-Eingriffrings einen Innendurchmesser aufweist, der größer ist als der Außendurchmesser der Erwärmungsscheibe (520).

8. Vorrichtung nach Anspruch 1, **dadurch gekennzeichnet, dass** die Mündungs-Eingriffsmittel (500) einen zweiten Ring (520) aus einem Werkstoff geringer Wärmeleitfähigkeit aufweisen, der konzentrisch zu dem oberen Teil (510a) des ersten Rings (510) anzubringen ist.

9. Vorrichtung nach Anspruch 1, **dadurch gekennzeichnet, dass** sie eine Einrichtung (300) zum Anbringen der Kartusche (1) den Erwärmungsmitteln aufweist.

10. Vorrichtung nach Anspruch 9, **dadurch gekennzeichnet, dass** die Anbringeinrichtung eine Platte (300) aufweist, vereint mit Gleitstücken (310), die auf den Pfosten (210) des Basisstücks (200) verlagerbar sind, wobei die Platte mit einem Mittelloch (301) koaxial zu der Kolbenstange (111) des Zylinders (110) vorgesehen ist und einen Innendurchmesser besitzt, der kleiner ist als der Durchmesser des unteren Teils (510b) des Rings (510) der Einrichtung (500) für das Zusammenbringen mit der Mündung der Kartusche, jedoch größer ist als der Außendurchmesser der Kartusche selbst.

11. Vorrichtung nach Anspruch 10, **dadurch gekennzeichnet, dass** die Anbringmittel mit einem Sensor (320) ausgestattet sind, der in der Lage ist, das Passieren der Platte (300) während des Hubs in Richtung der Erwärmungsscheibe nachzuweisen.

12. Vorrichtung nach Anspruch 11, **dadurch gekennzeichnet, dass** der Sensor (320) dazu ausgebildet ist, ein Bestätigungssignal für den Betrieb der Mittel (110, 112) zum Halten und Andrücken der Kartusche auszugeben.

13. Vorrichtung nach Anspruch 9, **dadurch gekennzeichnet, dass** die Anbringeinrichtung manuell ist.

14. Vorrichtung nach Anspruch 9, **dadurch gekennzeichnet, dass** die Anbringeinrichtung Griffelemente (302) aufweist.

15. Vorrichtung nach Anspruch 1, **dadurch gekennzeichnet, dass** die Mittel (700) zum Programmieren, Steuern und zum automatischen Ausführen der Parameter und der Arbeitsabfolgen aufweist.

## Revendications

1. Appareil pour chauffer et extraire des adhésifs (2) contenus à l'état solide à l'intérieur de cartouches flexibles scellées, comprenant des moyens (110, 111, 112) pour supporter et presser contre le fond de la cartouche, des moyens (420) pour ramollir l'adhésif (2) à l'intérieur de la cartouche, des moyens (440) pour aspirer et distribuer l'adhésif (2), lesdits moyens pour ramollir (420) et lesdits moyens pour aspirer (440) étant réunis à une pièce de base supérieure fixe (200),
**caractérisé en ce qu'**il comprend une pièce de base inférieure fixe (100) sur laquelle sont réunis lesdits moyens de support et de pressage (110, 111, 112), lesdits moyens de support et de pressage étant déplaçables par rapport à ladite pièce de base inférieure fixe (100) depuis une position de fin de course inférieure, correspondant à une condition de cartouche pleine, jusqu'à une position de fin de course supérieure, correspondant à une condition de cartouche vide, et des moyens (500) pour engager l'embouchure de la cartouche (1) avec lesdits moyens de ramollissement (420), et
**en ce que** lesdits moyens (500) pour engager l'embouchure de la cartouche (1) comprennent une bague (510) formée par :
- une première partie supérieure (510a) avec un diamètre intérieur légèrement plus grand que le diamètre extérieur du disque de chauffage (420), et avec une hauteur sensiblement correspondante à la hauteur dudit disque de chauffage, et
- une seconde partie inférieure (510b) avec un diamètre correspondant sensiblement au diamètre extérieur de la cartouche (1).

2. Appareil selon la revendication 1, **caractérisé en ce que** ladite pièce de base inférieure fixe (100) présente une ouverture traversante (101).

3. Appareil selon la revendication 1, **caractérisé en ce que** des premières extrémités de montants (210) sont fixées sur ladite pièce de base inférieure (100), les extrémités opposées desdits montants étant réunies à la pièce de base supérieure fixe (200).

4. Appareil selon la revendication 2, **caractérisé en ce que** lesdits moyens pour supporter et presser la cartouche (1) comprennent un cylindre (110) qui est fixé sur la pièce de base inférieure (100) et dont la tige (111) est déplaçable à l'intérieur et coaxialement avec son ouverture (101), un plateau (112) capable de venir en contact avec le fond (1a) de la cartouche (1) étant fixé à l'extrémité libre de la tige (111).

5. Appareil selon la revendication 1, **caractérisé en ce qu'**une surface portante tronconique (510c) capable de former un arrêt de fin de course pour venir engager l'embouchure de la poche est prévue entre la première partie (510a) et la seconde partie (510b) de la bague (510).

6. Appareil selon la revendication 1, **caractérisé en ce qu'**une gorge annulaire (511) pour loger un joint torique (512) est formée sur la surface extérieure de la partie inférieure (510b) de la bague (510).

7. Appareil selon la revendication 1, **caractérisé en ce que** ladite première partie (510a) de la bague engageant l'embouchure a un diamètre intérieur plus grand que le diamètre extérieur du disque chauffant (420).

8. Appareil selon la revendication 1, **caractérisé en ce que** lesdits moyens engageant l'embouchure (500) comprennent une seconde bague (520) faite d'un matériau avec une faible conductivité thermique, à monter de façon concentrique avec la partie supérieure (510a) de la première bague (510).

9. Appareil selon la revendication 1, **caractérisé en ce qu'**il comprend un dispositif (300) pour l'insertion de la cartouche (1) sur les moyens chauffants.

10. Appareil selon la revendication 9, **caractérisé en ce que** ledit dispositif d'insertion comprend une plaque (300) réunie à des coulisseaux (310) déplaçables sur les montants (210) de la pièce de base (200), ladite plaque étant pourvue d'un trou central (301) coaxial avec la tige (111) du cylindre (110) et ayant un diamètre intérieur plus petit que le diamètre de la partie inférieure (510b) de la bague (510) du dispositif (500) pour venir engager l'embouchure de la cartouche, mais plus grand que le diamètre extérieur de la cartouche elle-même.

11. Appareil selon la revendication 10, **caractérisé en ce que** lesdits moyens d'insertion sont associés avec un capteur (320) capable de détecter le mouvement de la plaque (300) qui passe pendant la course vers le disque chauffant.

12. Appareil selon la revendication 11, **caractérisé en ce que** ledit capteur (320) est conçu pour émettre un signal de consentement pour le fonctionnement des moyens (110, 112) pour supporter et presser la cartouche.

13. Appareil selon la revendication 9, **caractérisé en ce que** ledit dispositif d'insertion est manuel.

14. Appareil selon la revendication 9, **caractérisé en ce que** ledit dispositif d'insertion comprend des éléments d'agrippement (309).

15. Appareil selon la revendication 1, **caractérisé en ce qu'**il comprend des moyens (700) pour la programmation, la commande et l'exécution automatique des paramètres et des séquences de travail.
